# EUROPEAN PATENT APPLICATION

(11) **EP 4 760 656 A1**
(43) Date of publication of application: **17.06.2026**
(21) Application number: 25212928.3
(22) Date of filing: 03.11.2025
(51) Int. Cl.: G06V 20/52, G06V 40/20

(54) **INFORMATION NOTIFICATION PROGRAM, INFORMATION NOTIFICATION METHOD, AND INFORMATION PROCESSING DEVICE**

(30) Priority: 11.12.2024 JP 2024217126
(71) Applicant: FUJITSU LIMITED, Kawasaki-shi, Kanagawa 211-8588 (JP)
(72) Inventor: KIKUCHI, Takashi, Kawasaki-shi, Kanagawa, 211-8588 (JP)
(74) Representative: Hoffmann Eitle

(57) **Abstract**

An information notification program causes a computer to execute a process including acquiring domain knowledge information including a work procedure of an operation to be monitored, analyzing video to be monitored and first identifying an image region of a person and an image region of an object to be worked by the person in the video, inputting a prompt composed of a feature of the identified image region of the person, a feature of the identified image region of the object, and the domain knowledge information to a large multi-modal model, and causing, when a work performed by the person in the video is not a behavior based on the work procedure of the operation, the large multi-modal model to generate information related to the work procedure, and notifying the generated information related to the work procedure.

## Description

### FIELD

The embodiment discussed herein is related to an information notification program, an information notification method, and an information processing device.

### BACKGROUND

In recent years, the development of technologies of large multi-modal models (LMMs), such as GPT (registered trademark) -4o and Gemini (registered trademark) -1.5 Pro, has led to remarkable improvement in the ability of information processing devices to understand images and video. The improved ability to understand images and video enables the information processing devices to perform practical tasks, such as caption generation and visual question answering (VQA) for the input images and video.

However, most conventional LMMs are good at understanding spatially and temporally broad information but poor at understanding spatially and temporally local information. In terms of space, for example, the conventional LMMs are good at understanding what is happening on the entire image in one image but poor at understanding with fine granularity on the image, such as a specific place or person. In terms of time, the conventional LMMs can readily hold information on an event with a large visual change because they store therein one video in a manner smoothed in the temporal direction. However, if the visual change of a specific object is relatively small, information on the event of the specific object, if important, is likely to be missing. In other words, the conventional LMMs have poor ability to understand an event of a specific object with a relatively small temporal visual change.

To further improve the understanding ability, it is important that the LMM has a mechanism that can extract and process object information specified by a user with priority such that the LMM can understand spatially and temporally local video information with high accuracy. There have been developed the following techniques to extract and process the object information specified by the user with priority.

For example, there has been developed a technique using a visual prompt for an image. A visual prompt is a visual instruction directly described on an image or the like by the user. The technique using a visual prompt for an image enables the LMM to understand images and perform VQA under the condition of focusing on a specified point.
Patent document 1: Japanese Laid-open Patent Publication No. 2023-077365
Patent document 2: Japanese Laid-open Patent Publication No. 2021-043561

When the object to be processed is video, however, the visual prompt for an image makes it substantially difficult for the user to provide the visual prompt to all the frames of the video. If the visual prompt is specified for one specific frame of the video, it is not clear whether the LMM can interpret the visual prompt in the same manner on all the frames of the video.

Thus, it is difficult to improve the LMM's ability to understand video using the visual prompt for an image. Therefore, when analyzing a work of a person using the visual prompt for an image, the LMM fails to properly understand the work of the person and generate information on an appropriate work procedure.

Accordingly, it is an object in one aspect of an embodiment of the invention to provide an information notification program, an information notification method, and an information processing device capable of generating information on an appropriate work procedure.

### SUMMARY

According to an aspect of an embodiment, an information notification program causes a computer to execute a process including acquiring domain knowledge information including a work procedure of an operation to be monitored, analyzing video to be monitored and first identifying an image region of a person and an image region of an object to be worked by the person in the video, inputting a prompt composed of a feature of the identified image region of the person, a feature of the identified image region of the object, and the domain knowledge information to a large multi-modal model, and causing, when a work performed by the person in the video is not a behavior based on the work procedure of the operation, the large multi-modal model to generate information related to the work procedure, and notifying the generated information related to the work procedure.

### BRIEF DESCRIPTION OF DRAWINGS

FIG. 1 is a diagram of an exemplary entire configuration of a system according to a first embodiment;
FIG. 2 is a diagram for explaining an information processing device according to the first embodiment;
FIG. 3 is a diagram for explaining an image acquired at each processing;
FIG. 4 is a functional block diagram of the functional configuration of the information processing device according to the first embodiment;
FIG. 5 is a flowchart of the procedure performed by an answer controller;
FIG. 6 is a diagram for explaining a video analyzer;
FIG. 7 is a block diagram of a related region estimator;
FIG. 8 is a diagram of the outline of visual question answering by the video analyzer according to the first embodiment;
FIG. 9 is a diagram of the outline of related region estimation by the related region estimator; and
FIG. 10 is a diagram for explaining an exemplary hardware configuration.

### DESCRIPTION OF EMBODIMENTS

Preferred embodiments will be explained with reference to accompanying drawings. The embodiments do not intend to limit the present invention. The embodiments can be combined as appropriate within a range without inconsistency.

### (a) First Embodiment

### Entire Configuration

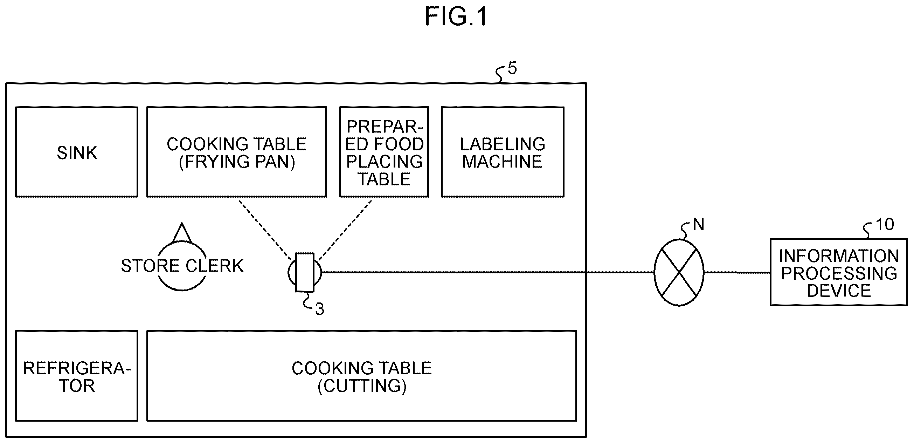

FIG. 1 is a diagram of an exemplary entire configuration of a system according to a first embodiment. As illustrated in FIG. 1, the system includes a monitoring camera 3 (hereinafter, which may be simply referred to as "camera 3") and an information processing device 10. The monitoring camera 3 is installed in a place where an operation to be monitored is performed. The information processing device 10 acquires video data (hereinafter, which may be simply referred to as "video") from the monitoring camera 3 to perform various processing. The monitoring camera 3 and the information processing device 10 are connected by a network N, such as the Internet, whether wired or wireless.

In the present embodiment, for example, the monitoring camera 3 monitors a cooking place 5 where prepared foods are cooked in a store in a retail industry, and the information processing device 10 recognizes the behaviors of a cook and autonomously detects appropriate and improvable behaviors during cooking to provide coaching to the cook.

Typically, supermarkets have a wide variety of prepared foods, and if a cooking error is discovered, the foods need to be wasted. For this reason, cooking errors need to be grasped before the foods are sold at the store. In addition, education to reduce errors is also needed. While the method of recognizing the already cooked prepared food alone enables detection of cooking errors, it does not lead to the education of cooks. To address this, the present embodiment describes a video recognition technique in which a multi-modal model or a large multi-modal model (LMM) recognizes the behaviors of a cook and autonomously detects appropriate and improvable behaviors during cooking to provide coaching to the cook.

The monitoring camera 3 is a camera that can monitor the cooking place 5 in all directions. The monitoring camera 3, for example, captures video data composed of a plurality of frames (images) and outputs it to the information processing device 10. The video data includes a series of images of the cook taking out ingredients from a refrigerator, washing them in a sink, cooking them on a cooking table, and issuing a label for a prepared food A by a labeling machine after the completion of cooking according to the work procedure for making the prepared food A. This video data also includes images of the cook's motions not included in the work procedure, such as a break, because the monitoring camera 3 always captures video.

The cooking place 5 is a place where various prepared foods are cooked and corresponds to a monitoring place according to the present embodiment. The cooking place is equipped with a refrigerator, a sink, a cooking table, a prepared food placing table on which a finished prepared food is placed, and a labeling machine that issues a label including the name, price, and expiration date for the finished prepared food. The motion of operating the labeling machine can be identified by an AI agent or the like, which will be described later, so it is an example of an operation on the agent.

The information processing device 10 is an example of a computer that recognizes the behaviors of a cook from the video acquired from the camera 3 and autonomously detects appropriate or improvable behaviors during cooking to provide coaching to the cook. Specifically, the information processing device 10 acquires domain knowledge information including a work procedure of an operation to be monitored. The information processing device 10 analyzes the video to be monitored, thereby identifying an image region of a person and an image region of an object to be worked by the person in the video. The information processing device 10 inputs a prompt composed of the feature of the identified image region of the person, the feature of the identified image region of the object, and the domain knowledge information to the large multi-modal model. When a work performed by the person in the video is not a behavior based on the work procedure of the operation, the information processing device 10 causes the large multi-modal model to generate information related to the work procedure and notifies a user of the generated information related to the work procedure.

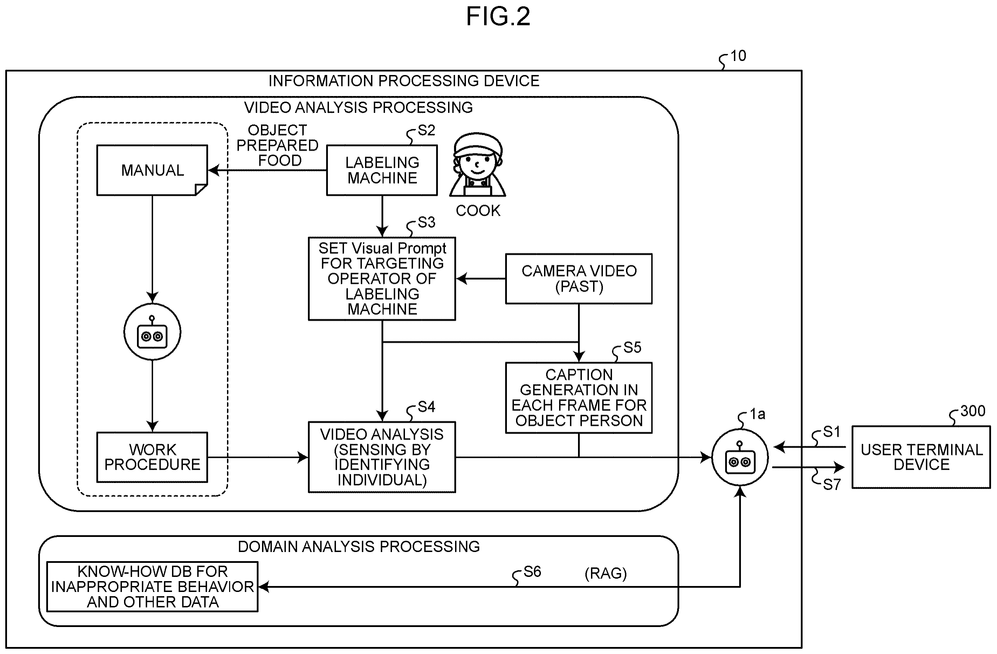

The following specifically describes the processing performed by the information processing device 10 with reference to FIG. 2. FIG. 2 is a diagram for explaining the information processing device 10 according to the first embodiment.

### Premises

As illustrated in FIG. 2, the information processing device 10 executes an AI agent 1a (hereinafter simply referred to as an agent), such as a chatbot, and the agent generates and outputs an appropriate answer to a request from the user. The information processing device 10, for example, receives input of a request, such as "I need advice on a safe and efficient method for cooking the prepared food A", from a user terminal device 300 used by the user and generates an answer to this request. Besides the request, the information processing device 10 can also receive input from the cook to be coached. Examples of the input data include, but are not limited to, an image of the person, the feature of the person, etc.

### Preparations

The information processing device 10 holds a work procedure (domain knowledge information) obtained by extracting the main points of a cooking manual that describes the procedure to completion for each prepared food. The information processing device 10, for example, inputs a written cooking manual to the LMM to generate the work procedure. The work procedure includes "Step 1: take out the ingredients from the refrigerator and wash it in the sink" and "Step 2: cut the ingredients into specified sizes", for example. The work procedure may be in the form of images instead of sentences.

The information processing device 10 also holds a know-how database (DB) in which inappropriate behaviors or the like not appropriate in the cooking process are recorded. The Inappropriate behaviors include, for example, behaviors that should not be carried out during cooking, such as "not washing hands before starting cooking", "being away from the stove for more than two minutes", and "not returning to the prepared food placing table for more than five minutes after placing the prepared food on the prepared food placing table".

### Specific Examples of Processing

The information processing device 10, for example, receives a request, such as "I need advice on a safe and efficient method for cooking the prepared food A", from the user terminal device 300 (S1). The information processing device 10 acquires video data in which the prepared food A is being cooked and detects "issue of a label by the labeling machine", which is the final step of the cooking process (S2).

After that, the information processing device 10 sets Visual Prompt for targeting an operator of the labeling machine (S3). The information processing device 10, for example, can perform object detection or the like using an object detection model on an image of the operator operating the labeling machine to identify a target and set Visual Prompt including the target and Visual Prompt for the prepared food A (object) cooked by the target. The information processing device 10 can also output the image of the operator operating the labeling machine to the user terminal device 300 and receive settings of Visual Prompts for the person and the object from the user.

Subsequently, the information processing device 10 refers to the work procedure and performs a video analysis for sensing by identifying an individual (S4). The information processing device 10, for example, performs a typical video analysis on the video data to obtain (extract) each image included in the work procedure.

Meanwhile, the information processing device 10 generates a caption in each frame for an object person from the video data (S5). The information processing device 10, for example, acquires images of the object person (target) performing various works and motions from a series of video in which the prepared food A is being cooked. For example, the information processing device 10 performs an image analysis or other methods to acquire images of the target performing various works corresponding to the work procedure and images of motions not included in the work procedure but performed in an interval between the works corresponding to the work procedure. Examples of the images of the motions in an interval include, but are not limited to, "images of the object person who is not cooking", "images of the prepared food A", "images of persons other than the object person", etc.

The information processing device 10 also performs a domain analysis for considering measures using the know-how DB and a user journey. The information processing device 10, for example, generates generation information including appropriate measures based on the know-how DB and the results of the video analysis (S6).

Subsequently, the information processing device 10 inputs the various pieces of information generated at S1 to S6 to the multi-modal model to generate an answer and outputs it to the user (S7). The information processing device 10, for example, generates a prompt including the results of the video analysis generated at S4 (images included in the work procedure), the results of the extraction obtained at S5 (images of the object person performing motions), the generated results (measures) generated at S6, and the request that "I need advice on a safe and efficient method for cooking the prepared food A" received from the user and inputs it to the multi-modal model. Subsequently, the information processing device 10 acquires an answer, such as "working with the prepared food left on the prepared food placing table increases the risk of contamination or the like, so the work needs to be reviewed" from the multi-modal model and provides coaching to the user.

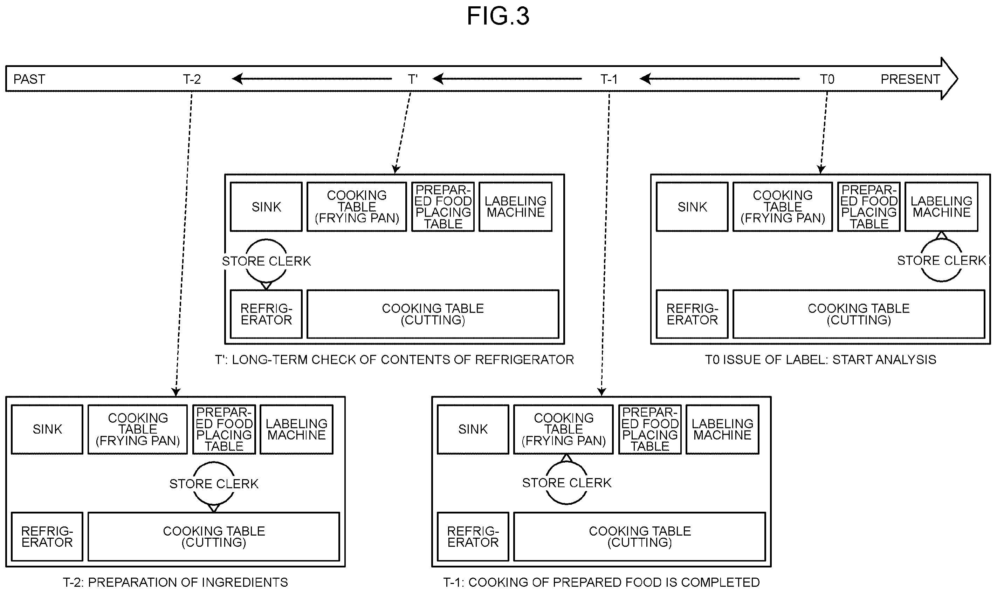

The following describes the image acquired at each processing described with reference to FIG. 2. FIG. 3 is a diagram for explaining the image acquired at each processing. In FIG. 3, the system task of the information processing device 10 is "detection of the works described in the manual" and "detection of the motions in an interval time", for example.

As illustrated in FIG. 3, the information processing device 10 acquires an image of the final process of "issue of a label by the labeling machine" corresponding to S2 in FIG. 2 at time T0 and starts referring to past images from time T0. Subsequently, the information processing device 10 acquires an image of the work "cooking of the prepared food is completed" included in the work procedure at time T-1 and acquires an image of the work "preparation of ingredients" included in the work procedure at time T-2 prior to time T-1 by the video analysis at S4 in FIG. 2.

Meanwhile, the information processing device 10 acquires an image of the motion "long-term check of the contents of the refrigerator" not included in the work procedure at time T' by the capture generation at S5 in FIG. 2. In the caption generation at S5 in FIG. 2, the images obtained by the video analysis at S4 in FIG. 2 are also acquired.

Subsequently, the information processing device 10 causes the multi-modal model to perform an analysis using the prompt including the images of the work procedure at time T-1 and time T-2 and the image of a characteristic motion not included in the work procedure at time T'. As a result, the information processing device 10 can extract that there is room for improvement in the image "long-term check of the contents of the refrigerator" at time T' without the need to view the entire long-time video. Therefore, the information processing device 10 can generate the information on an appropriate work procedure.

### Functional Configuration

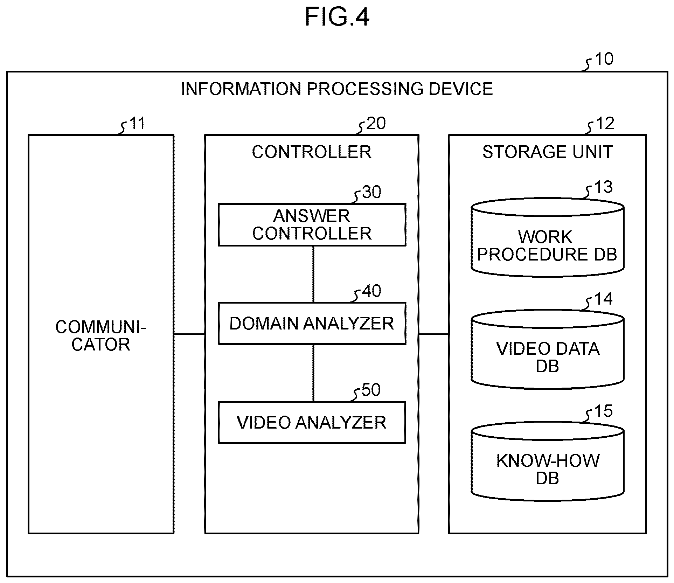

FIG. 4 is a functional block diagram of the functional configuration of the information processing device 10 according to the first embodiment. As illustrated in FIG. 4, the information processing device 10 includes a communicator 11, a storage unit 12, and a controller 20.

The communicator 11 is a processor that controls communications with other devices and is implemented by a communication interface, for example. The communicator 11, for example, receives video from the camera 3 installed at the monitoring place. The communicator 11 also receives a request from the user terminal device 300 used by the user and transmits an answer to the question to the user terminal device 300.

The storage unit 12 is a processor that stores therein various data and various computer programs executed by the controller 20 and is implemented by a memory or a hard disk, for example. The storage unit 12 stores therein a work procedure DB 13, a video data DB 14, and a know-how DB 15, for example. Besides the DBs described above, the storage unit 12 also stores therein various trained machine learning models (e.g., LLM, LMM, and multi-modal model) used by the controller 20, for example.

The work procedure DB 13 is a database that stores therein the domain knowledge information including the procedure of works performed at the monitoring place. The work procedure DB 13 stores therein the work procedure obtained by extracting the main points of the cooking manual that describes the procedure from the start to the end of cooking for each prepared food, for example.

The video data DB 14 is a database that stores therein video to be analyzed. The video data DB 14 according to the present embodiment stores therein the video captured by the camera 3, for example. The video data DB 14 may store therein the video frame by frame.

The know-how DB 15 is a database that stores therein domain knowledge specific to a certain field. Specifically, the know-how DB 15 stores therein information needed to consider the measures and knowledge needed to interpret the results. The know-how DB 15 according to the present embodiment stores therein not only the know-how of the cooking process but also the images and sentences of inappropriate behaviors not appropriate in the cooking process, for example.

The controller 20 is a processor that controls the information processing device 10 and is implemented by a processor, for example. The controller 20 implements an answer controller 30, a domain analyzer 40, and a video analyzer 50. The answer controller 30, the domain analyzer 40, and the video analyzer 50 are implemented by electronic circuits included in the processor or processes executed by the processor, for example.

### Answer Controller 30

The answer controller 30 is a processor that executes the agent 1a described above and causes the agent 1a to perform various controls. Specifically, the answer controller 30 acquires the domain knowledge information including the work procedure of the operation to be monitored. The answer controller 30 analyzes the video to be monitored, thereby identifying an image region of a person and an image region of an object to be worked by the person in the video. The answer controller 30 inputs a prompt composed of the feature of the identified image region of the person, the feature of the identified image region of the object, and the domain knowledge information to the large multi-modal model. When a work performed by the person in the video is not a behavior based on the work procedure of the operation, the large multi-modal model generates information related to the work procedure. The answer controller 30 notifies the user of the generated information related to the work procedure.

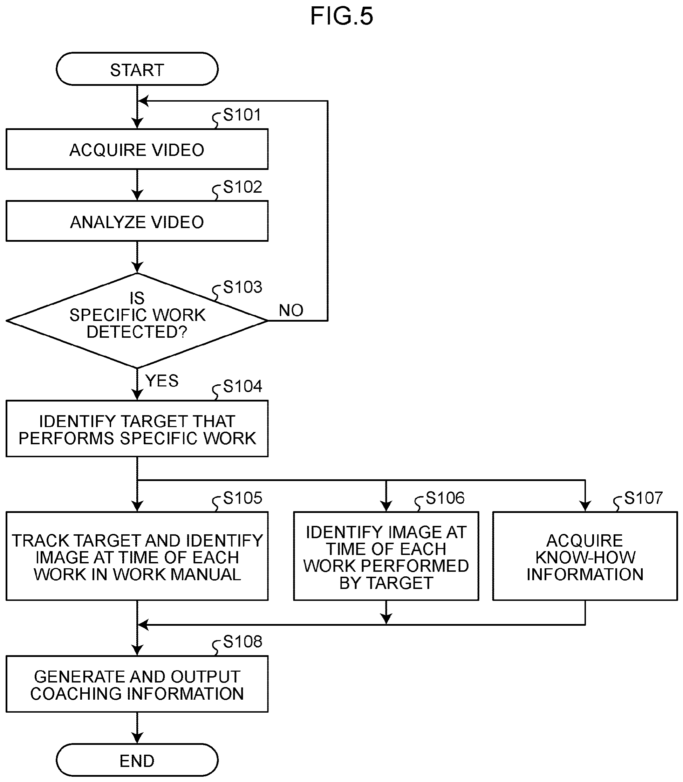

The answer controller 30, for example, causes the agent 1a to perform the following processing. FIG. 5 is a flowchart of the procedure performed by the answer controller 30. As illustrated in FIG. 5, the agent 1a acquires video from the camera 3, a DB that stores therein past video, or other components (S101). At this time, the agent 1a may acquire a request for coaching or the like from the user.

Subsequently, the agent 1a analyzes the video (S102) and performs detection of a specific work corresponding to the last step of the cooking of prepared food (S103). If the agent 1a detects the specific work (Yes at S103), it identifies a target that performs the specific work from the image in which the specific work is detected (S104). The agent 1a, for example, can perform an image analysis to identify the region of the target and the region of the object (prepared food) to be worked by the target. The agent 1a may present the user with the image in which the specific work, such as an operation on the labeling machine, is detected and allow the user to select the region of the target or the region of the object (prepared food) to be worked by the target.

Subsequently, the agent 1a performs S105, S106, and S107. Specifically, the agent 1a uses an image tracking technique to track the target and identifies the image at the time of each work in the work manual (S105). The agent 1a, for example, acquires the image corresponding to the work manual from the video data.

The agent 1a identifies the image at the time of each work performed by the target (S106). The agent 1a, for example, acquires the image of each motion (work) performed by the target from the video data using the video analysis and the tracking technique.

The agent 1a acquires know-how information (S107). The agent 1a, for example, acquires the know-how information on cooking and inappropriate behaviors needed for an answer to the request.

Subsequently, the agent 1a generates a prompt including the information acquired at S105 to S107, the request input from the user, and the contents of instruction for outputting an answer to the request, inputs the prompt to the large multi-modal model to generate coaching information, and outputs it to the user (S108).

### Domain Analyzer 40

The domain analyzer 40 is a processor that causes the agent 1a to perform a domain analysis for considering measures using the work procedure DB 13, the know-how DB, and the user journey. The domain analyzer 40, for example, acquires the work procedure corresponding to the cooking process specified as the object to be monitored from the work procedure DB and outputs it to the answer controller 30.

The domain analyzer 40 performs a morphological analysis or the like on the request that "I need advice on a safe and efficient method for cooking the prepared food A" input by the user to identify the object "prepared food A". Subsequently, the domain analyzer 40 acquires inappropriate behaviors during the cooking of the object "prepared food A" from the know-how DB 15 and outputs it to the answer controller 30.

### Video Analyzer 50

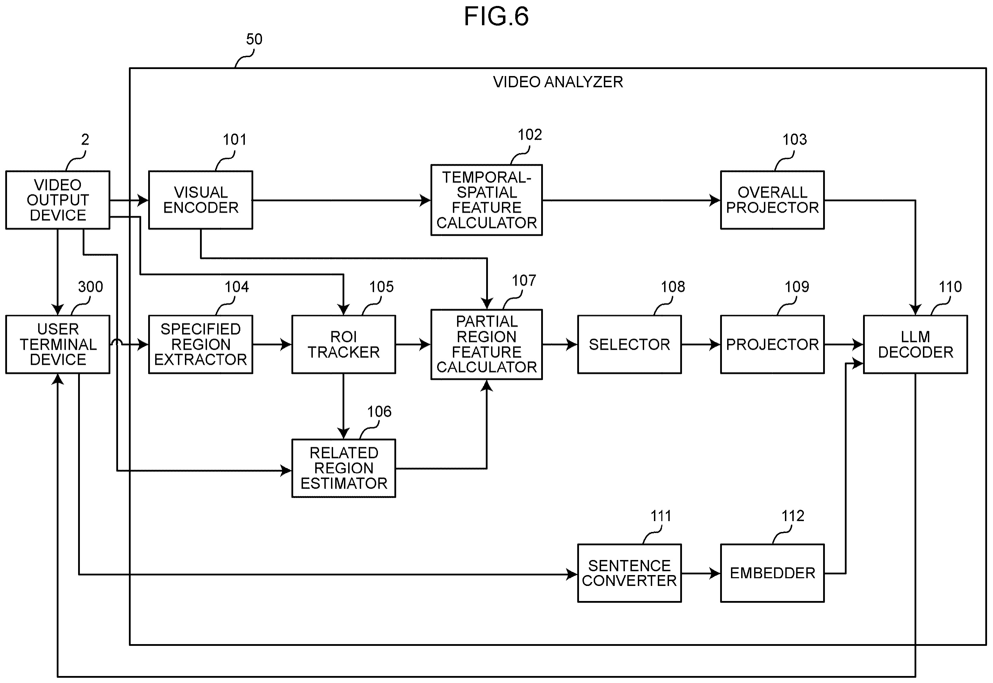

The video analyzer 50 is a processor that causes the agent 1a to perform a video analysis for detecting images corresponding to the "works described in the manual" and the "motions in an interval" described above from the video captured by the camera 3. FIG. 6 is a diagram for explaining the video analyzer 50. As illustrated in FIG. 6, the video analyzer 50 is connected to a video output device 2 and the user terminal device 300.

The video output device 2 corresponds to the camera 3 described above and is a device that outputs long-time video to be monitored of more than one hour, for example. The video output device 2, for example, acquires and outputs video continuously captured by a fixed-point video installed at the cooking table.

The user terminal device 300 is a device used by the user who needs to obtain an answer to a request (including a question) based on video using the video analyzer 50. In other words, the user terminal device 300 receives input of video from the video output device 2 and the information processing device 10. The user refers to the display screen of the user terminal device 300 to select a frame for specifying a visual prompt indicating the object on which the user is focusing from the video acquired by the user terminal device 300 using the user terminal device 300. In the following description, the frame selected by the user as the frame for specifying a visual prompt is referred to as "selected frame". The user uses the user terminal device 300 to specify the region including the object on which the user is focusing in the selected frame by the visual prompt. In addition, the user terminal device 300 receives input of a question related to the region on which the user is focusing indicated by the visual prompt from the user.

The user terminal device 300 outputs the information on the selected frame and the visual prompt indicating the object on which the user is focusing to a specified region extractor 104 of the video analyzer 50. The user terminal device 300 also outputs a text prompt containing a question related to the object on which the user is focusing to a sentence converter 111 of the video analyzer 50. The object specified by the user using the visual prompt is an example of a "first object", and the frame in which the user specifies the object on which the user is focusing using the visual prompt is an example of a "predetermined video frame". The text prompt containing a question related to the object on which the user is focusing is an example of a "request related to the first object".

The user can use the display screen of the user terminal device 300 to check the answer from the video analyzer 50 to the question related to the object on which the user is focusing.

The video analyzer 50 includes a visual encoder 101, a temporal-spatial feature calculator 102, an overall projector 103, a specified region extractor 104, an ROI tracker 105, a related region estimator 106, a partial region feature calculator 107, a selector 108, and a projector 109. The video analyzer 50 further includes an LLM decoder 110, a sentence converter 111, and an embedder 112.

The visual encoder 101 receives input of video output by the video output device 2. The visual encoder 101 calculates the feature of the entire image for each frame of the video. The picture represented by the entire region of each frame of the video is referred to as an image. In other words, video is a continuous set of images of the respective frames. In the following description, the feature of the entire image is referred to as an image feature. The visual encoder 101 outputs the image feature of each frame to the temporal-spatial feature calculator 102 and the partial region feature calculator 107.

The temporal-spatial feature calculator 102 receives input of the image feature of each frame of the video from the visual encoder 101. The temporal-spatial feature calculator 102 calculates the spatial feature and the temporal feature of the entire video based on the temporal relation and the spatial relation in each frame of the object in the image. The temporal-spatial feature calculator 102 outputs the spatial feature and the temporal feature of the entire video to the overall projector 103.

While the temporal-spatial feature calculator 102 according to the present embodiment calculates both the spatial feature and the temporal feature of the entire video, it may calculate one of them. In other words, the temporal-spatial feature calculator 102 calculates the spatial or temporal image feature of the video.

The overall projector 103 receives inputs of the spatial feature and the temporal feature of the entire video from the temporal-spatial feature calculator 102. The overall projector 103 performs embedding on the spatial feature and the temporal feature of the entire video to match them to the space of the feature of the LLM decoder 110. The overall projector 103, for example, performs processing, such as matching the number of dimensions of the spatial feature and the temporal feature of the entire video to that of the feature space of the LLM decoder 110. Subsequently, the overall projector 103 outputs the embedded data of the spatial feature and the temporal feature of the entire video to the LLM decoder 110.

The specified region extractor 104 receives input of the information on the user's selected frame of the video output from the video output device 2 and the information on the visual prompt specified by the user on the image of the selected frame from the user terminal device 300. The specified region extractor 104 extracts a partial region on the image indicated by the visual prompt for the image of the selected frame as ROI. The specified region extractor 104, for example, can set X- and Y-axes on the image of the selected frame and use the X- and Y-coordinates indicating each point in the image to represent the partial region.

The specified region extractor 104 according to the present embodiment extracts the ROI as a region called a bounding box (BBox). A BBox is a rectangular partial region that separates the object region of the object on which the user is focusing from the external region by enclosing it with the smallest rectangle serving as a boundary. For example, the BBox is represented as a rectangle enclosing a predetermined region on the image of the selected frame. The specified region extractor 104 can represent the BBox by the X-Y coordinates of the two vertices on the diagonal and defines the region enclosed by the BBox as the ROI. The specified region extractor 104 outputs the information on the ROI to the ROI tracker 105.

Thus, the specified region extractor 104 receives input of an operation to specify the first region where the first object is positioned in the predetermined video frame displayed on the display screen of the user terminal device 300, that is, the information on the visual prompt.

The ROI tracker 105 receives input of the video output by the video output device 2. The ROI tracker 105 receives input of the BBox indicating the information on the ROI corresponding to the visual prompt specified by the user from the specified region extractor 104.

The ROI tracker 105 searches for and tracks a partial region corresponding to the ROI on the image of the selected frame for each frame of the video. Thus, the ROI tracker 105 extracts the partial region corresponding to the visual prompt specified by the user for each frame of the video output by the video output device 2. Subsequently, the ROI tracker 105 outputs the information on the ROI and the partial region of each frame of the video to the related region estimator 106 and the partial region feature calculator 107. In the following description, the ROI and the partial region of each frame of the video are collectively referred to as "ROI-corresponding partial region".

The ROI tracker 105 is an example of a "region identifier". The ROI-corresponding partial region extracted by the ROI tracker 105 is an example of a "first region where a first object is positioned in a predetermined video frame out of a plurality of video frames included in acquired video". In other words, the specified region extractor 104 acquires the video to be monitored and identifies the first region where the first object is positioned in the predetermined video frame out of a plurality of video frames constituting the acquired video based on the processing performed by the specified region extractor 104.

The related region estimator 106 has a machine learning model that estimates the related region related to the ROI-corresponding partial region in the image of each frame. The related region estimator 106 receives input of the video output by the video output device 2. The related region estimator 106 receives input of the information on the ROI-corresponding partial region from the ROI tracker 105.

The related region estimator 106 uses a machine learning model and receives input of the entire image and the image of the ROI-corresponding partial region for each frame from which the ROI-corresponding partial region is extracted to estimate a predetermined number of related regions highly related to the ROI-corresponding partial region in each frame in descending order of relevance. The related region estimator 106 outputs the information on the estimated related regions highly related to the ROI-corresponding partial region as estimation results.

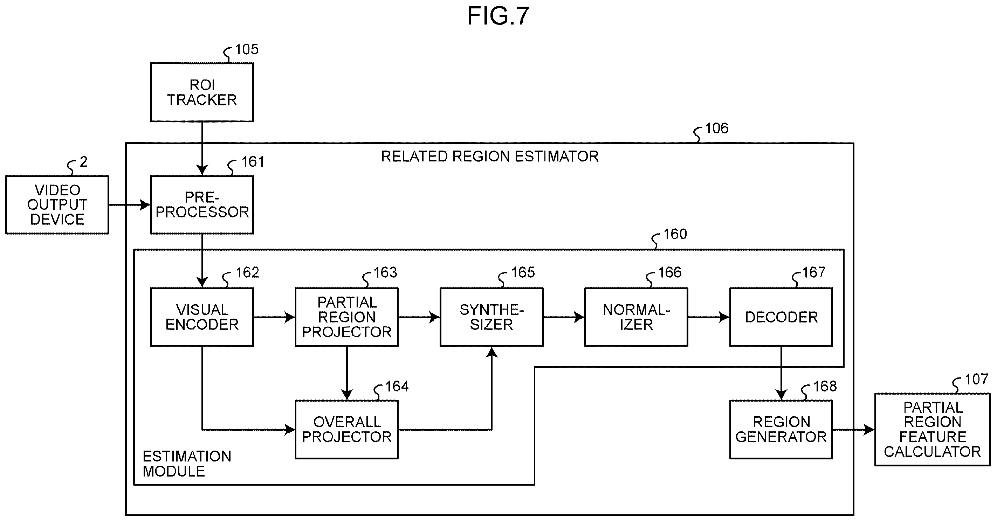

FIG. 7 is a block diagram of the related region estimator. The related region estimator 106 is described below in greater detail with reference to FIG. 7. As illustrated in FIG. 7, the related region estimator 106 includes a preprocessor 161, a visual encoder 162, a partial region projector 163, an overall projector 164, a synthesizer 165, a normalizer 166, a decoder 167, and a region generator 168. An estimation module 160 includes the visual encoder 162, the partial region projector 163, the overall projector 164, the synthesizer 165, the normalizer 166, and the decoder 167. The estimation module 160 corresponds to the machine learning model that estimates the related region related to the ROI-corresponding partial region in the image of each frame.

The preprocessor 161 receives input of the video output by the video output device 2 and the information on the ROI-corresponding partial region output from the ROI tracker 105. The preprocessor 161 then identifies the frame from which the ROI-corresponding partial region is extracted from the video output by the video output device 2. In the following description, the frame from which the ROI-corresponding partial region is extracted is referred to as "object frame".

The preprocessor 161 cuts out a partial image corresponding to the ROI-corresponding partial region from each of the images of the object frames. Subsequently, the preprocessor 161 outputs, for each object frame, the image of the frame and the partial image corresponding to the ROI-corresponding partial region in the frame to the visual encoder 162.

The visual encoder 162 receives, for each object frame, input of the image of the frame and the partial image corresponding to the ROI-corresponding partial region in the frame from the preprocessor 161. The visual encoder 162 then calculates the feature of the ROI-corresponding partial region from the partial image corresponding to the ROI-corresponding partial region in the object frame. In the following description, the feature of the ROI-corresponding partial region is referred to as "partial region feature". Subsequently, the visual encoder 162 outputs the partial region feature in the object frame to the partial region projector 163.

The visual encoder 162 also calculates the image feature of the entire frame for the object frame. In the following description, the image feature of the entire frame extracted by the visual encoder 162 is referred to as "overall feature". Subsequently, the visual encoder 162 outputs the overall feature of the object frame to the overall projector 164.

The partial region projector 163 receives input of the partial region feature in the object frame from the visual encoder 162. The partial region projector 163 performs conversion on the information indicating each partial region feature to facilitate comparing the partial region feature with the overall feature. The partial region projector 163, for example, performs processing of matching the image spaces, including making the number of dimensions of the partial region feature equal to that of the overall feature and matching the parts to be focused. Subsequently, the partial region projector 163 outputs the partial region feature in the object frame subjected to conversion to the synthesizer 165.

The overall projector 164 receives input of the overall feature of the object frame from the visual encoder 162. The overall projector 164 performs conversion on the information indicating each overall feature. Subsequently, the overall projector 164 outputs the overall feature in each object frame subjected to conversion to the synthesizer 165.

The synthesizer 165 receives input of the partial region feature in each object frame subjected to conversion from the partial region projector 163. The synthesizer 165 receives input of the overall feature in each object frame subjected to conversion from the overall projector 164. The synthesizer 165 then synthesizes the partial region feature and the overall feature for each object frame. The synthesizer 165, for example, performs matrix calculation of integrating the partial region feature with the overall feature. In the following description, the result of synthesis of the partial region feature and the overall feature is referred to as "synthesized feature". The synthesizer 165 outputs the synthesized feature of each object frame to the normalizer 166.

Thus, the synthesizer 165 synthesizes the partial region feature and the overall feature to obtain the feature related to the partial feature in the overall feature. In other words, this feature corresponds to the feature indicating the region related to the ROI-corresponding partial region.

The normalizer 166 receives input of the synthesized feature of each object frame from the synthesizer 165. The normalizer 166 then normalizes each synthesized feature using a softmax function or the like. Subsequently, the normalizer 166 outputs the normalized synthesized feature to the decoder 167.

The decoder 167 receives input of the normalized synthesized feature of the object frame from the normalizer 166. The decoder 167 then generates a relevance attention map indicating the partial region highly related to the ROI-corresponding partial region from the synthesized feature for the object frame. The decoder 167 according to the present embodiment generates the relevance attention map indicating a predetermined number of partial regions in descending order of relevance. Subsequently, the decoder 167 outputs the relevance attention map for each object frame to the region generator 168.

The region generator 168 receives input of the relevance attention map for each object frame from the decoder 167. The region generator 168 generates related region information indicating the related region of each object frame from the relevance attention map. The region generator 168, for example, generates a BBox of the related region for each object frame. Subsequently, the region generator 168 outputs the related region information of each object frame to the partial region feature calculator 107.

The related region is an example of a "second region", and an object in the related region is an example of a "second object". In other words, the related region estimator 106 analyzes the acquired video, thereby identifying the second object related to the first object present in the first region serving as the BBox indicating the ROI out of a plurality of objects included in each of a plurality of video frames. More specifically, the related region estimator 106 searches the video frames for the first region to identify the second region including the second object for each video frame. The related region estimator 106 uses the estimation module 160 that generates the relevance attention map displaying a peripheral region related to the first object according to the relevance to identify the second object based on the attention map generated by the estimation module 160.

Referring back to FIG. 6, the explanation is continued. The partial region feature calculator 107 receives input of the image feature of each frame of the video calculated by the visual encoder 101. The partial region feature calculator 107 also receives input of the information on the ROI-corresponding partial region output from the ROI tracker 105. The partial region feature calculator 107 also receives input of the related region information of each object frame estimated by the related region estimator 106.

The partial region feature calculator 107 then calculates the feature of the ROI-corresponding partial region from the image feature of each frame of the video. The partial region feature calculator 107 calculates the feature of the related region from the image feature of each frame of the video. Subsequently, the partial region feature calculator 107 outputs the feature of the ROI-corresponding partial region and the feature of the related region to the selector 108.

The selector 108 receives input of the feature of the ROI-corresponding partial region and the feature of the related region from the partial region feature calculator 107. The selector 108 selects the feature of the ROI-corresponding partial region and the feature of the related region used to generate an answer to a request by removing an overlapping feature and an unimportant feature from the feature of the ROI-corresponding partial region and the feature of the related region, for example. The selector 108, for example, can classify the feature of the ROI-corresponding partial region and the feature of the related region using the K-means method, select groups considering the similarity of the groups or the like, and select a predetermined number of features that match specific conditions from the selected groups. Subsequently, the selector 108 outputs the selected feature of the ROI-corresponding partial region and the selected feature of the related region to the projector 109.

By selecting the feature based on both the feature of the ROI-corresponding partial region and the feature of the related region, the selector 108 can select the feature considering the state of not only the ROI-corresponding partial region but also the related region. The selector 108, for example, can select the feature when a change in the ROI-corresponding partial region is not large but a change in the related region is large. This configuration enables important information on the related region to be included in the request. Thus, the video analyzer 50 selects a plurality of image features from the image features of the first object and the second object using the K-means method.

The projector 109 receives input of the feature of the ROI-corresponding partial region and the feature of the related region selected by the selector 108. The projector 109 performs embedding on the feature of the ROI-corresponding partial region and the feature of the related region to match them with the space of the feature of the LLM decoder 110. Subsequently, the projector 109 outputs the embedded data of the feature of the ROI-corresponding partial region and the feature of the related region to the LLM decoder 110.

The sentence converter 111 receives input of a text prompt that describes a request related to the video including the ROI from the user terminal device 300. The sentence converter 111 performs sentence conversion, such as dividing the sentence of the text prompt into words, according to the format of the request to the LLM decoder 110. Thus, the sentence converter 111 identifies what kind of request to the LLM decoder 110 is input. Subsequently, the sentence converter 111 outputs the text prompt subjected to text conversion to the embedder 112.

Thus, the sentence converter 111 identifies the request related to the first object specified by the user using the visual prompt. More specifically, the sentence converter 111 receives a request document (question sentence) including the request related to the first object present in the first region from the user and identifies the request based on the request document.

The embedder 112 receives input of the text prompt subjected to sentence conversion from the sentence converter 111. The embedder 112 performs embedding, such as converting the text prompt into a vector, to convert the text prompt into a form capable of being input to the LLM decoder 110. Subsequently, the embedder 112 outputs the text prompt subjected to embedding to the LLM decoder 110.

The LLM decoder 110 is a machine learning model that receives input of the feature related to an image and a text prompt of a question related to the image and outputs an answer to the request. The LLM decoder 110 receives input of the embedded data of the spatial feature and the temporal feature of the entire video from the overall projector 103. The LLM decoder 110 also receives input of the embedded data of the feature of the ROI-corresponding partial region and the feature of the related region from the projector 109. The LLM decoder 110 also receives input of the embedded data of the text prompt from the embedder 112.

The LLM decoder 110 generates an answer to the request indicated by the text prompt based on the embedded data of the spatial feature and the temporal feature of the entire video and the embedded data of the feature of the ROI-corresponding partial region and the feature of the related region. Subsequently, the LLM decoder 110 outputs the generated answer to the user terminal device 300.

Thus, the LLM decoder 110 generates an answer based on the spatial feature and the temporal feature of the entire video, the feature of the ROI-corresponding partial region, and the feature of the related region. In other words, the LLM decoder 110 can generate the answer to the request considering the events that occur in the related region. The answer generated by the LLM decoder 110 is transmitted to the user terminal device 300 and displayed on the display screen.

Thus, the LLM decoder 110 generates an answer to the request based on the question related to the first object serving as the object specified by the visual prompt and specified by the user using the visual prompt and on the image feature of the second object present in the related region. More specifically, the LLM decoder 110 generates the answer based on a plurality of image features selected by the selector 108. The LLM decoder 110 is an example of a "large multi-modal model".

In other words, the video analyzer 50 generates an answer to the request by inputting the prompt including the request and the image features of the first object and the second object to a large multi-modal model. The video analyzer 50 calculates the embedding of the spatial or temporal image feature, a plurality of image features selected by the selector 108, and the question, and inputs the calculated embedding to the large multi-modal model to generate an answer.

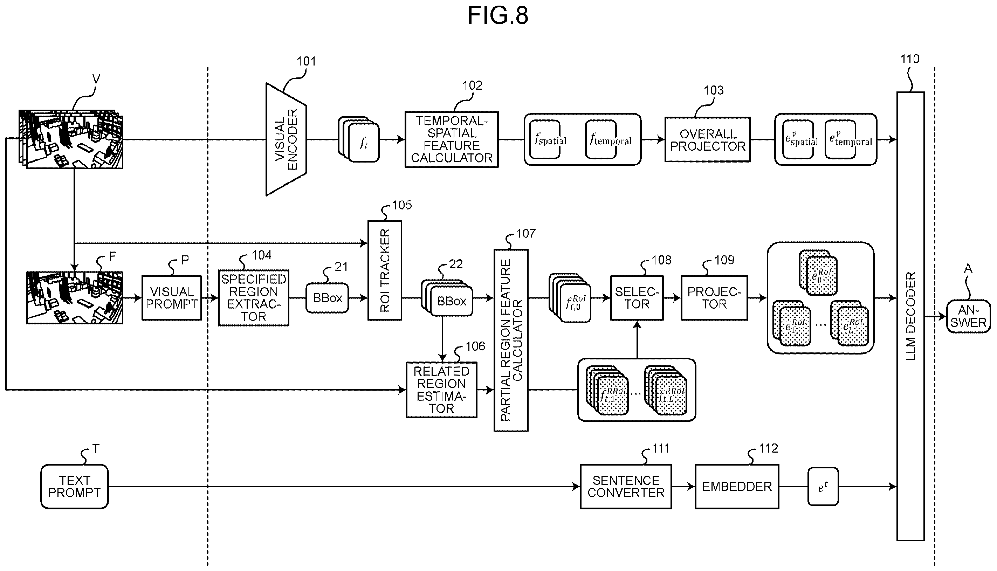

FIG. 8 is a diagram of the outline of visual question answering by the video analyzer 50 according to the first embodiment. Next, the outline of visual question answering by the video analyzer 50 is described with reference to FIG. 8. FIG. 8 also illustrates data used for each processing. The data is described using the respective names in FIG. 8.

The video output device 2 outputs video V. The video V includes many consecutive frames. The user selects a selected frame F from the video V using the user terminal device 300 and sets a visual prompt P for the selected frame F.

The visual encoder 101 calculates an image feature ft of each frame from the video V.

The temporal-spatial feature calculator 102 calculates a spatial feature fₛₚₐₜᵢₐₗ and a temporal feature fₜₑₘₚₒᵣₐₗ of the video V from the image feature ft of each frame calculated by the visual encoder 101.

The overall projector 103 performs embedding on the spatial feature fₛₚₐₜᵢₐₗ to match it to the space of the feature of the LLM decoder 110 and generates embedded data e^{ν}ₛₚₐₜᵢₐₗ of the spatial feature. Similarly, the overall projector 103 performs embedding on the temporal feature fₜₑₘₚₒᵣₐₗ to match it to the space of the feature of the LLM decoder 110 and generates embedded data e^{ν}ₜₑₘₚₒᵣₐₗ of the temporal feature.

The specified region extractor 104 generates a BBox 21 indicating the ROI serving as the partial region specified by the visual prompt P based on the visual prompt P for the selected frame F.

The ROI tracker 105 searches each frame of the video V using the BBox 21 and generates a BBox 22 indicating the ROI-corresponding partial region of each frame.

The related region estimator 106 estimates the related region in each object frame serving as the source of extraction of the ROI-corresponding partial region from the BBox 22 indicating the ROI-corresponding partial region of each frame and the video V. The related region estimator 106 estimates L related regions in descending order of relevance.

The partial region feature calculator 107 calculates a feature f^{Roi}_{t,0} of the ROI-corresponding partial region of each object frame from the BBox 22 indicating the ROI-corresponding partial region of each object frame.

The partial region feature calculator 107 also calculates features f^{RRoi}_{t,1} to f^{RRoi}_{t,L} of the respective related regions of each object frame from the information indicating the related region in each object frame. There are L related regions, so the partial region feature calculator 107 calculates the features f^{RRoi}_{t,1} to f^{RRoi}_{t,L} of the respective L related regions.

The selector 108 selects the feature to be used for the request from the feature f^{Roi}_{t,0} of the ROI-corresponding partial region and the features f^{RRoi}_{t,1} to f^{RRoi}_{t,L} of the respective related regions of each object frame.

The projector 109 performs embedding on the feature selected by the selector 108 to generate embedded data e^{RoI}₀ and embedding data e^{RoI}₁ to e^{RoI}_{L} related to the ROI-corresponding partial region and the related regions.

The sentence converter 111 performs sentence conversion on a text prompt T according to the format of the question to the LLM decoder 110.

The embedder 112 performs embedding on the text prompt T subjected to sentence conversion to generate embedded data e^{t}.

The LLM decoder 110 receives input of the embedded data e^{ν}ₛₚₐₜᵢₐₗ of the spatial feature, the embedded data e^{ν}ₜₑₘₚₒᵣₐₗ of the temporal feature, the embedded data e^{RoI}₀ and the embedded data e^{RoI}₁ to e^{RoI}_{L} related to the ROI-corresponding partial region and the related regions, and the embedded data e^{t} indicating the request. The LLM decoder 110 generates an answer A to the request related to the object specified in the video and the visual prompt based on the input data.

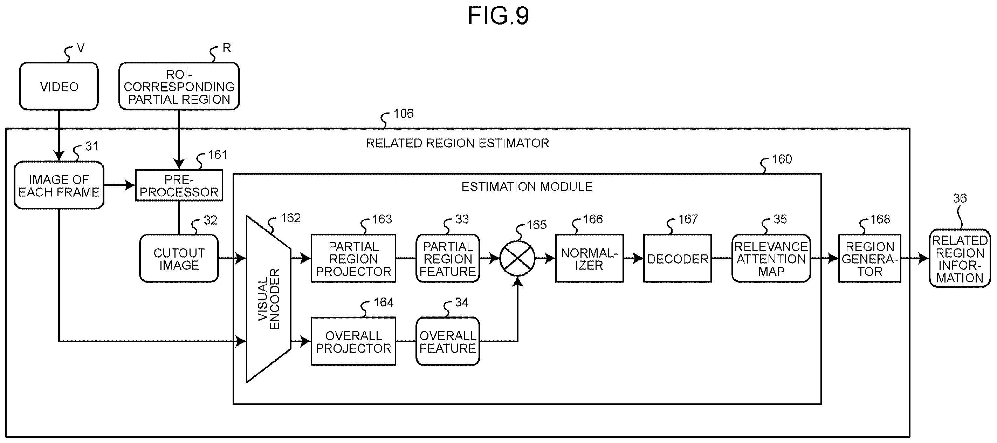

FIG. 9 is a diagram of the outline of related region estimation by the related region estimator. Next, the outline of related region estimation by the related region estimator is described with reference to FIG. 9. FIG. 9 also illustrates data used for each processing. The data is described using the respective names in FIG. 9.

The preprocessor 161 generates a cutout image 32 by cutting out the region indicated by a ROI-corresponding partial region R from an image 31 of each frame included in the video V.

The visual encoder 162 calculates the partial region feature of the ROI-corresponding partial region from the cutout image 32. The visual encoder 162 also calculates the overall feature of each frame from the image 31 of each frame.

The partial region projector 163 performs conversion on the partial region feature of the ROI-corresponding partial region to generate a partial region feature 33.

The overall projector 164 performs conversion on the overall feature of each frame to generate an overall feature 34.

The synthesizer 165 integrates the matrices of the partial region feature 33 and the overall feature 34 to generate a synthesized feature.

The normalizer 166 performs normalization on the synthesized feature.

The decoder 167 performs decoding on the synthesized feature subjected to normalization to generate a relevance attention map 35.

The region generator 168 generates related region information 36 indicating the related region of each frame from the relevance attention map 35. After that, the processing by the partial region feature calculator 107 illustrated in FIG. 8 is performed.

### Advantageous Effects

As described above, when a work performed by the person in the video is not a behavior based on the work procedure of the operation, the information processing device 10 can cause the large multi-modal model to generate information related to the work procedure and notifies the user of the generated information related to the work procedure. As a result, the information processing device 10 can identify the person's motion not included in the work procedure while identifying the work included in the work procedure and provide the user with appropriate coaching considering the effects of the motion not included in the work procedure on the work to be monitored.

The information processing device 10 can allow the user to select the request, the person to be monitored, the object, or the like using the visual prompt. As a result, when analyzing the work of the person using the visual prompt for an image, the information processing device 10 can properly understand the work of the person and generate information on an appropriate work procedure.

The information processing device 10 can generate an answer to the request using an operation corresponding to the final step of the cooking process (operation on the labeling machine) as a trigger. As a result, the information processing device 10 can process all the steps of each work process as an object to be analyzed without omission, thereby improving the analysis accuracy and the accuracy of the answer.

### (b) Second Embodiment

While the embodiment of the present invention has been described, the invention may be implemented in a variety of different forms besides the embodiment above.

### AI Agent

The following describes examples of the variations of the AI agent used in the embodiment above. Part of the processing procedure and the control procedure described in the specification above and the drawings may be used as those for the AI agent. When provided with a goal, for example, the AI agent can generate a task to achieve the goal, collect information needed to cause the multi-modal model to perform the generated task, and cause the multi-modal model to perform the task. For example, a request is set as the goal.

Specifically, when provided with a goal, the AI agent causes the multi-modal model to generate a task to achieve the goal. The AI agent then collects information to cause the multi-modal model to perform the generated task from the storage unit 12 and performs the task by inputting the information collected from the storage unit 12 to the multi-modal model. The AI agent inputs the collected information to the multi-modal model, thereby generating information related to the work procedure.

The AI agent, for example, collects domain knowledge of the operation needed in the area in the video to be monitored from the domain knowledge of a plurality of operations. The AI agent, for example, collects an image in which an image region of a person and an image region of an object to be worked by the person in the video to be monitored are identified. The AI agent, for example, inputs a prompt composed of the feature of the collected image region of the person, the feature of the collected image region of the object, and the collected domain knowledge to the large multi-modal model, thereby generating information related to the work procedure for a person who has performed a work not included in a specific operation to perform the specific operation.

The AI agent, for example, generates coaching information for a person who has performed a work not included in a specific operation to perform the specific operation. Therefore, the information processing device 10 can notify the user of the coaching information based on the processing performed by the AI agent.

### Multi-modal Model

The multi-modal model used in the embodiments above is a model trained with various kinds of information. The multi-modal model is a language model, such as an attenuation model and a transfer model, trained to estimate the next token from an input token string and output it. Examples of the transfer model include, but are not limited to, GPT, BERT, etc. The language model described above is preferably trained such that the information input to the language model is not used as a new answer to conceal the input information, such as personal information. The multi-modal model may be fine-tuned, for example.

The multi-modal model, for example, is a neural network trained using a token set that masks some tokens out of a plurality of tokens. In this case, for example, the image feature is mapped to a token. For example, some of the tokens included in the token set are masked, and the information processing device 10 estimates the masked tokens, thereby training the multi-modal model. The large multi-modal model is trained to generate an answer to the request when a prompt including the request and the image features of the first object and the second object is input to the large multi-modal model, for example. The multi-modal model can be trained by any desired training method, such as pre-training and fine tuning.

### Numerical Values and Others

The machine learning model, such as LMM, the features, the video, the number of agents, and the like used in the embodiments above are given by way of example only and can be optionally modified. The procedure of the processing described in each flowchart can also be modified as appropriate within a range without inconsistency. The trigger for starting the processing, such as an operation on the labeling machine, may be specified in advance or determined to be the final process included in the work procedure. The image region of the target (cook) described above corresponds to an example of a first image region, the image region of the prepared food included in the process of the cooking work described above corresponds to an example of a second image region, and the image region of the motion in an interval described above corresponds to an example of a third image region. The present embodiment may employ LLMs, LMMs, multi-modal models, or the like.

### Application Examples

While the embodiments above have described the coaching in the cooking process for the prepared food as an example, they are not necessarily applied thereto. The embodiments above are also applicable to education in the retail industry, such as on-the-job training (OJT). Specifically, any operation capable of being defined as a work procedure can be subjected to the same processing as in the first embodiment as a coaching object. Examples of the operation include, but are not limited to, display work for commodities, customer service work, etc. In such a case, the trigger corresponding to the operation on the labeling machine described above may be the last step of a series of works, such as "entering the backyard" or "ending a conversation with a customer".

### System

The processing procedure, control procedure, specific names, and information including various data and parameters described in the specification above and the drawings may be optionally modified, unless otherwise noted.

The specific forms of distribution and integration of the components of each device are not limited to those illustrated in the figures. For example, the answer controller 30, the domain analyzer 40, and the video analyzer 50 may be implemented by different agents, and the agents may be implemented by different devices. In other words, all or some of the components may be functionally or physically distributed and integrated in desired units depending on various loads and use conditions. Furthermore, all or desired some of the processing functions of each device can be implemented by a CPU and a computer program analyzed and executed by the CPU, or as hardware by wired logic.

Furthermore, all or desired some of the processing functions executed in each device can be implemented by a CPU and a computer program analyzed and executed by the CPU, or as hardware by wired logic.

### Hardware

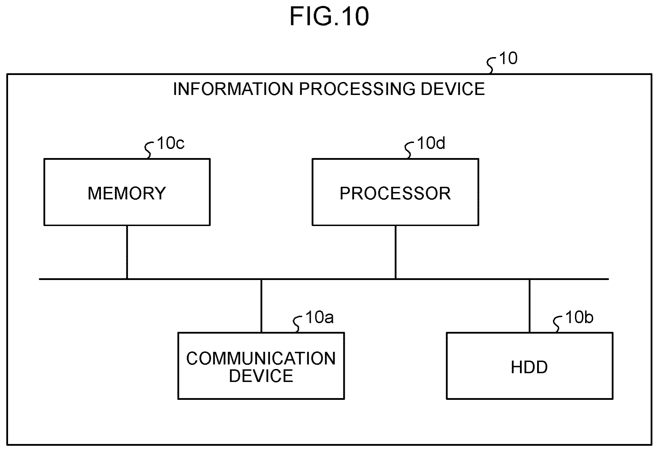

FIG. 10 is a diagram for explaining an exemplary hardware configuration. As illustrated in FIG. 10, the information processing device 10 includes a communication device 10a, a hard disk drive (HDD) 10b, a memory 10c, and a processor 10d. The units illustrated in FIG. 10 are connected to each other by a bus or the like.

The communication device 10a is a network interface card or the like and communicates with other devices. The HDD 10b stores therein computer programs and DBs that implement the functions illustrated in FIG. 4.

The processor 10d reads a computer program for performing the same processing as each processing unit illustrated in FIG. 4 from the HDD 10b or other components and loads it to the memory 10c, thereby operating a process for implementing the functions described with reference to FIG. 4 and other figures. This process, for example, implements the same function as each processing unit included in the information processing device 10. Specifically, the processor 10d reads a computer program having the same functions as the answer controller 30, the domain analyzer 40, and the video analyzer 50 from the HDD 10b, for example. The processor 10d then executes the process that performs the same processing as the answer controller 30, the domain analyzer 40, the video analyzer 50, and other components.

As described above, the information processing device 10 reads and executes a computer program, thereby operating as an information processing device that performs an information processing method. Alternatively, the information processing device 10 may read the computer program described above from a recording medium by a medium reading device and execute the read computer program, thereby implementing the same functions as those of the embodiments above. The computer program according to other embodiments is not necessarily executed by the information processing device 10. For example, the embodiments above may also be applied to a case where other computers or servers execute the computer program or where they cooperate to execute the computer program.

The computer program may be distributed via a network, such as the Internet. The computer program may be recorded in a computer-readable recording medium, such as a hard disk, a flexible disk (FD), a CD-ROM, a magneto-optical disk (MO), and a digital versatile disc (DVD), and read from the recording medium and executed by a computer.

According to an embodiment, information on an appropriate work procedure can be generated.

## Claims

1. An information notification program that causes a computer (10) to execute a process comprising:
acquiring (S101, S107) domain knowledge information including a work procedure of an operation to be monitored;
analyzing (S102) video to be monitored and first identifying (S103, S104) an image region of a person and an image region of an object to be worked by the person in the video;
inputting (S108) a prompt composed of a feature of the identified image region of the person, a feature of the identified image region of the object, and the domain knowledge information to a large multi-modal model, and causing (S108), when a work performed by the person in the video is not a behavior based on the work procedure of the operation, the large multi-modal model to generate information related to the work procedure; and
notifying (S108) the generated information related to the work procedure.

2. The information notification program according to claim 1, wherein the process further includes:
acquiring (S101) the video to be monitored;
second identifying (S101, S102, S103) a first region where a first object is positioned in a predetermined video frame out of a plurality of video frames included in the acquired video, and a request related to the first object present in the first region;
analyzing (S101, S102, S103) the acquired video and identifying (S103, S104) a second object related to the first object present in the first region out of a plurality of objects in each of the video frames; and
generating (S108) an answer to the request based on the request related to the first object and image features of the first object and the second object.

3. The information notification program according to claim 2, wherein
the second identifying (S101, S102, S103) includes receiving an operation to specify the first region where the first object is positioned in the predetermined video frame displayed on a display screen and a request document related to the first object present in the first region from the user, and identifying the request based on the request document,
the generating (S108) includes inputting a prompt including the request and the image features of the first object and the second object to the large multi-modal model and generating the answer to the request, and
the notifying (S108) includes displaying the answer to the request on the display screen.

4. The information notification program according to claim 2, wherein the process further includes:
third identifying (S106), when an operation on an agent (1a) is performed, a person who has performed the operation in the video; and
targeting (S106) the identified person and setting the first region, wherein
the agent (1a) provides coaching based on the information related to the work procedure generated by the large multi-modal model to the person who has performed the operation.

5. The information notification program according to claim 1, wherein
the acquiring (S101, S107) includes acquiring the domain knowledge information including a work procedure of a specific operation performed in a retail industry,
the first identifying (S103, S104) includes analyzing video of a work place where the specific operation is being performed in the retail industry and identifying the image region of the person and the image region of the object to be worked by the person, and
the generating (S108) includes inputting the prompt composed of the feature of the image region of the person, the feature of the image region of the object, and the domain knowledge information to the large multi-modal model, and causing, when a work performed by the person is not a behavior based on the work procedure of the specific operation, the large multi-modal model to generate information related to the work procedure.

6. The information notification program according to claim 5, wherein
the first identifying (S103, S104) includes analyzing the video of the work place and identifying a first image region when the person performs a work included in the work procedure of the specific operation, a second image region of the object to be worked when the work is performed, and a third image region when the person performs a work not included in the specific operation,
the generating (S108) includes inputting the prompt composed of features of the first image region, the second image region, and the third image region, and the domain knowledge information to the large multi-modal model and generating information on an effect of the work not included in the specific operation on the specific operation, and
the notifying (S108) includes outputting the information on the effect on the specific operation output by the large multi-modal model.

7. The information notification program according to claim 6, wherein
the generating (S108) includes:
acquiring technical information on specialized knowledge and technique related to the specific operation from a storage DB in which the technical information is stored; and
generating the prompt using the technical information and inputting the prompt to the large multi-modal model, thereby generating coaching information for the person who has performed the work not included in the specific operation to perform the specific operation, and
the notifying (S108) includes outputting the coaching information.

8. The information notification program according to claim 6, wherein
the work place is a cooking place where prepared food is cooked in a store in the retail industry,
the specific operation is a cooking operation performed at the cooking place,
the work procedure is a cooking process until the prepared food is completed,
the first image region is an image region of a work included in the cooking process,
the second image region is an image region of the prepared food at a place where the work included in the cooking process is performed, and
the third image region is an image region of a place where the person has performed a work not included in the cooking process.

9. The information notification program according to claim 1, wherein the large multi-modal model is a neural network trained using a token set that masks some tokens out of a plurality of tokens and is trained to generate an answer to a request when a prompt including the request and image features of the person and the object is input to the large multi-modal model.

10. The information notification program according to claim 1, wherein
an AI agent (1a) generates, when provided with a goal, a task to achieve the goal, collects information to cause the large multi-modal model to perform the generated task from a storage unit, and inputs the information collected from the storage unit to the large multi-modal model, thereby causing the large multi-modal model to generate the information related to the work procedure, and
the information collected from the storage unit is domain knowledge of an operation needed in an area in the video to be monitored and an image in which the image region of the person and the image region of the object to be worked by the person in the video to be monitored are identified.

11. An information notification method carried out by a computer (10), comprising:
acquiring (S101, S107) domain knowledge information including a work procedure of an operation to be monitored;
analyzing (S102) video to be monitored and identifying (S103, S104) an image region of a person and an image region of an object to be worked by the person in the video;
inputting (S108) a prompt composed of a feature of the identified image region of the person, a feature of the identified image region of the object, and the domain knowledge information to a large multi-modal model, and causing (S108), when a work performed by the person in the video is not a behavior based on the work procedure of the operation, the large multi-modal model to generate information related to the work procedure; and
notifying (S108) the generated information related to the work procedure.

12. An information processing device (10) that includes a control unit (20) configured to execute a process comprising:
acquiring (S101, S107) domain knowledge information including a work procedure of an operation to be monitored;
analyzing (S102) video to be monitored and identifying (S103, S104) an image region of a person and an image region of an object to be worked by the person in the video;
inputting (S108) a prompt composed of a feature of the identified image region of the person, a feature of the identified image region of the object, and the domain knowledge information to a large multi-modal model, and causing (S108) , when a work performed by the person in the video is not a behavior based on the work procedure of the operation, the large multi-modal model to generate information related to the work procedure; and
notifying (S108) the generated information related to the work procedure.
